# EUROPÄISCHE PATENTANMELDUNG

(11) **EP 0 997 711 A1**
(43) Veröffentlichungstag der Anmeldung: **03.05.2000**
(21) Anmeldenummer: 99120738.2
(22) Anmeldetag: 20.10.1999
(51) Int. Cl.: G01F 23/20, A01D 43/063

(54) **Füllstandssensor für Grasfangbehälter**

(30) Priorität: 26.10.1998 US 179040
(71) Anmelder: DEERE & COMPANY, Moline, Illinois 61265-8098 (US)
(72) Erfinder: Sebben, Daniel, Angelo, Hartford, WI 53027 (US); Randy, Edward, Benway, Horicon, WI 53032 (US); Zellmer, Timothy, Paul, Horicon, WI 53032 (US)
(74) Vertreter: Magin, Ludwig Bernhard

(57) **Zusammenfassung**

Füllstandssensoren werden an Arbeitsgeräten, wie beispielsweise an Maschinen zur Rasen-, Garten- und Grundstückspflege eingesetzt, um einer Bedienungsperson anzuzeigen, wenn ein Sammelbehälter zur Aufnahme von Material gefüllt ist und geleert werden sollte. Solche Füllstandssensoren können Hebel aufweisen, die durch die Einwirkung von sich ansammelndem Material verschwenken und einen Schalter betätigen, durch den ein beispielsweise akustisches oder optisches Signal ausgelöst wird.

Es wird ein Füllstandssensor mit einem Betätigungshebel (88) und einem Schalter (96), durch den ein Warnsignal auslösbar ist, vorgeschlagen, wobei der Betätigungshebel (88) um eine vorzugsweise zumindest annähernd horizontale Schwenkachse (108) schwenkbar angeordnet ist, und das Drehmoment des der Schwerkraft ausgesetzten Betätigungshebels (88) um die Schwenkachse veränderbar ist mit einer verschiebbaren Masse. Weiter wird ein Arbeitsgerät (10) mit einem solchen Füllstandssensor (86) vorgeschlagen.

Füllstandssensoren und Arbeitsgeräte werden in der Rasen-, Garten- und Grundstückspflege eingesetzt.

## Beschreibung

Die Erfindung betrifft einen Füllstandssensor mit einem Betätigungshebel und einem Schalter, durch den ein Warnsignal auslösbar ist, wobei der Betätigungshebel um eine vorzugsweise zumindest annähernd horizontale Schwenkachse schwenkbar angeordnet ist, und ein Arbeitsgerät, vorzugsweise ein Gerät zur Rasen-, Garten oder Grundstückspflege, mit wenigstens einer Arbeitseinheit, einem Auswurfkanal, einem Sammelbehälter und einem solchen Füllstandssensor.

Es ist bekannt, Grassammelbehälter mit Füllstandssensoren zu versehen. Diese Füllstandssensoren kommen in verschiedenen Ausführungsformen vor. Maschinen mit der Bezeichnung 1336 HR von CASTELGARDEN sind mit einer Art von Füllstandssensor ausgestattet, die einen um eine Achse schwenkbaren Hebel aufweist. Dieser Hebel ist in dem Sammelbehälter so angeordnet, daß sich Abfälle auf dem Arm ansammeln und bewirken, daß der Arm nach unten verschwenkt, wenn sich eine Grasanhäufung auf dem Boden des Sammelbehälters ansammelt und anwächst. Ein Schwenken des Hebels betätigt einen elektrischen Schalter, welcher einen hörbaren Alarm ertönen läßt, der eine Bedienungsperson darauf aufmerksam macht, daß der Sammelbehälter fast gefüllt ist. Diese Art von Füllstandssensor ist in dem Sammelbehälter in der Nähe der Stelle angeordnet, an der sich ein Sammelkanal in den Sammelbehälter hinein öffnet. Dies ist im allgemeinen die letzte Stelle des Sammelbehälters, die mit Gras gefüllt wird, und daher trägt eine Anordnung des Füllstandssensors unterhalb und in dichter Nähe zu dem Auswurf des Auswurfkanals dazu dabei, sicherzustellen, daß der Füllstandssensor nicht aktiviert wird, bis der Sammelbehälter fast gefüllt ist. Dieser Füllstandssensor ist so angeordnet, daß er betätigt wird, wenn sich Abfälle in solchem Maße angehäuft haben, daß sich die Anhäufung dem Auswurf des Auswurfkanals annähert. Ein solcher Füllstandssensor kann nicht an unterschiedliche Bedingungen, beispielsweise feuchtes oder trockenes Gras oder allgemein Sammelgut von unterschiedlicher Beschaffenheit, angepaßt werden.

Das der Erfindung zugrunde liegende Problem wird in der nicht optimalen Funktion des Füllstandssensors bzw. des Arbeitsgerätes bei unterschiedlichen Mähbedingungen gesehen.

Dieses Problem wird erfindungsgemäß durch die Lehre der Patentansprüche 1 bzw. 7 gelöst, wobei in den weiteren Patentansprüchen die Lösung in vorteilhafter Weise weiterentwickelnde Merkmale aufgeführt sind.

Auf diese Weise kann der Füllstandssensor an unterschiedliche Mähbedingungen angepaßt werden, indem die Empfindlichkeit des Füllstandssensors durch eine Veränderung des durch die Masse des Betätigungshebels hervorgerufenen Drehmoments verändert bzw. vermindert oder erhöht wird. Der Betätigungshebel wird durch die Masse sich an ihm an- oder auf ihm auflagernder Abfälle bzw. Materials verschwenkt. Die Tendenz des Betätigungshebels, um seine Schwenkachse zu verschwenken, wird durch die Veränderung des durch seine eigene Masse hervorgerufenen Drehmoments beeinflußt, wodurch abweichende Mengen von Abfällen bzw. Anhäufungen von Abfällen mit abweichender Masse nötig sind, um den Betätigungshebel zu verschwenken und so den Schalter und damit ein optisches oder akustisches Signal zu betätigen. Das Arbeitsgerät, mit dem der Betätigungshebel um eine vorzugsweise annähernd horizontale Achse verschwenkbar verbunden ist, kann beispielsweise ein handgeführtes oder handgeschobenes Gerät oder auch ein Fahrzeug, auf dem eine Bedienungsperson sitzt, sein. Dies können Geräte zur Rasen-, Garten- und Grundstückspflege wie Rasenmäher, Gartentraktoren, Aufsitzmäher, Laubsammler, Kehrmaschinen oder allgemein Geräte, durch die Material aufgenommen und in einen Sammelbehälter verbracht wird, wie beispielsweise Erntemaschinen wie Mähdreschern, sein. Es ist auch denkbar, einen erfindungsgemäßen Füllstandssensor an getragenen Geräten wie beispielsweise an Laubsaugern einzusetzen. Der Füllstandssensor ragt vorzugsweise zumindest bereichsweise in den Sammelbehälter des Arbeitsgeräts hinein, es ist aber auch denkbar, ihn in dem Sammelkanal vorzusehen, wenn es gewünscht sein sollte, auch den Sammelkanal bereichsweise zu füllen.

Eine Beeinflußung des durch die Masse des Betätigungshebels hervorgerufenen Drehmoments kann beispielsweise dadurch erfolgen, daß an dem Betätigungshebel in Abhängigkeit von den Betriebsbedingungen, beispielsweise der Feuchtigkeit und damit dem Gewicht des aufzunehmenden Materials, zusätzliche Gewichte angebracht bzw. wirksam mit diesem verbunden oder entfernt werden. Vorzugsweise wird aber nicht die Masse des Betätigungshebels bzw. die auf ihn wirkende Masse verändert, sondern es wird die Entfernung der Masse bzw. einzelner oder mehrerer Teilmassen des Betätigungshebels von seiner Schwenkachse und somit die Massenverteilung variiert, wodurch es nicht notwendig ist, an dem Füllstandssensor zusätzliche Bauteile vorzusehen, sondern nur die Position des Betätigungshebels bzw. von Bestandteilen des Betätigungshebels bzw. des Füllstandssensors verändert werden muß.

Dies kann beispielsweise dadurch erfolgen, daß an dem Betätigungshebel ein Gewichtelement vorgesehen ist, dessen Position bezogen auf den Betätigungshebel bzw. bezogen auf seine Schwenkachse veränderbar ist und das in verschiedenen Stellungen festlegbar ist.

In einfacher Weise kann dies erfolgen, indem das Gewichtelement in einer in dem Betätigungshebel vorgesehenen Führung verschieblich vorgesehen ist. Diese Führung kann beispielsweise als eine Schiene ausgeführt sein. Vorzugsweise wird sie aber durch einen Schlitz bzw. ein Langloch gebildet, in dem das Gewichtelement, das beispielsweise als eine Schraube mit einer aufgeschraubten Mutter ausgeführt sein kann, geführt wird. Durch ein Festziehen der Schraube auf der Mutter kann das Gewichtelement bezogen auf den Betätigungshebel festgelegt werden. Es ist aber auch denkbar, das Gewichtelement in anderer Weise, beispielsweise durch ein Verklemmen oder ein Einrasten, zu fixieren.

Der Füllstandssensor ragt vorzugsweise zumindest bereichsweise in den Sammelbehälter des Arbeitsgeräts hinein, es ist aber auch denkbar, ihn in dem Auswurfkanal vorzusehen, wenn es gewünscht sein sollte, den Auswurfkanal bereichsweise zu füllen.

Der in den Sammelbehälter bzw. in den Sammelkanal ragende Bereich des Betätigungshebels und der Schalter können auf der gleichen Seite der Schwenkachse angeordnet sein. Vorzugsweise sind der Schalter und dieser Bereich aber auf unterschiedlichen Seiten angeordnet, so daß der Schalter nicht mit dem aufgesammelten Material bzw. den Abfällen in Berührung kommt. Es kann auch vorgesehen sein, daß der Schalter außerhalb des Sammelbehälters angeordnet ist bzw. von diesem durch eine Trennwand oder durch einen Bestandteil eines Gehäuses getrennt ist, so daß es nicht zu Verschmutzungen, Beschädigungen oder ungewollten Betätigungen des Schalters kommt.

Aufgrund seiner robusten und einfachen Ausführung wird ein solcher Füllstandssensor an Arbeitsgeräten, wie vorzugsweise an Geräten zur Rasen-, Garten- oder Grundstückspflege, wie sie im vorstehenden bereits beschrieben wurden, vorgesehen, um deren Funktion und Bedienungskomfort zu verbessern.

Besonders günstig ist es, einen solchen Füllstandssensor an einem solchen Arbeitsgerät unterhalb und vorzugsweise in der Nähe des Auswurfs des Auswurfkanals anzuordnen, so daß das Warnsignal ausgelöst wird, bevor sich Material in dem Auswurfkanal des Arbeitsgeräts ansammelt und diesen verstopfen könnte. Es ist aber auch denkbar, den Füllstandssensor in anderen Bereichen in Abhängigkeit von der besonderen Ausführung des jeweiligen Sammelbehälters oder Auswurfkanals anzuordnen.

An dem Arbeitsgerät kann eine Leiteinrichtung vorgesehen sein, die den Gutstrom, der in den Sammelbehälter gelangt, leitet bzw. verteilt. Diese Leiteinrichtung kann in dem Auswurfkanal vorgesehen sein, vorzugsweise ist sie aber in dem Sammelbehälter vorgesehen und sorgt für ein gleichmäßiges Befüllen desselben. Vorzugsweise bewirkt sie, daß sich der Bereich, in dem der Füllstandssensor angeordnet ist, zuletzt füllt, so daß eine optimale Funktion des Füllstandsanzeigers bei unterschiedlichen Bedingungen unterstützt wird.

Die Leiteinrichtung ist vorzugsweise so angeordnet, daß der Gutstrom auf die rückwärtige Wand des Sammelbehälters auftreffen kann, wodurch der rückwärtige Bereich des Sammelbehälters vollständig gefüllt und somit ausgenutzt werden kann. Die Leiteinrichtung kann dabei so angeordnet sein, daß sie den aus dem Auswurf austretenden Gutstrom vollständig oder teilweise überdeckt und ist vorzugsweise so oberhalb des Füllstandssensors angeordnet, daß sie den Gutstrom, von diesem weglenkt.

Weist die Leiteinrichtung zumindest eine erste und eine zweite Oberfläche auf, die zwischen sich einen Winkel einschließen, dessen Scheitel dem Auswurf zugewandt ist, so wird der Gutstrom in Richtung der Seitenbereiche des Sammelbehälters geleitet, so daß sich ein zentraler Bereich, in dem sich der Füllstandssensor befindet, erst zu einem späten Zeitpunkt füllt und eine Betätigung des Füllstandssensors erst erfolgt, wenn der Sammelbehälter möglichst vollständig gefüllt ist. Vorzugsweise nähern sich die Oberflächen derartig an, daß sie v-förmig angeordnet sind oder daß die Leiteinrichtung in der Art eines V's angeordnet ist.

In der Zeichnung sind zwei nachfolgend näher beschriebene Ausführungsbeispiele der Erfindung dargestellt. Es zeigt:
- Fig. 1: eine Seitenansicht eines Arbeitsgerätes mit einem Mähdeck und einem an der Geräterückseite angebrachten Sammelbehälter,
- Fig. 2: eine perspektivische Ansicht des Sammelbehälters und eines Auswurfkanals, wobei ein als Kunststoffgehäuse ausgeführter zweiter Behälterbereich nur in unterbrochenen Linien dargestellt ist,
- Fig. 3: eine Ansicht von rückwärts auf einen ersten Behälterbereich bei abgenommenem zweitem Behälterbereich,
- Fig. 4: eine perspektivische Ansicht eines bereits in den Figuren 2 und 3 angedeuteten Füllstandssensors ohne sein Halterungselement zum Anbringen an den Sammelbehälter,
- Fig. 5: eine weitere perspektivische Ansicht des Füllstandssensors aus Figur 4 in seiner mittleren Stellung und mit dem Halterungselement,
- Fig. 6: eine Seitenansicht des Füllstandssensors aus Figur 4 und 5 in seiner oberen Stellung,
- Fig. 7: eine weitere Seitenansicht des Füllstandssensors in seiner oberen Stellung,
- Fig. 8: eine perspektivische Ansicht einer anderen Ausführungsform eines Füllstandssensors mit einem verstellbaren Gewichtelement,
- Fig. 9: eine Seitenansicht des Füllstandssensors aus Figur 8 mit einem Halterungselement und
- Fig. 10: eine Teilseitenansicht des ersten und des zweiten Behälterbereichs mit einer detaillierten Darstellung eines Gelenkmechanismus.

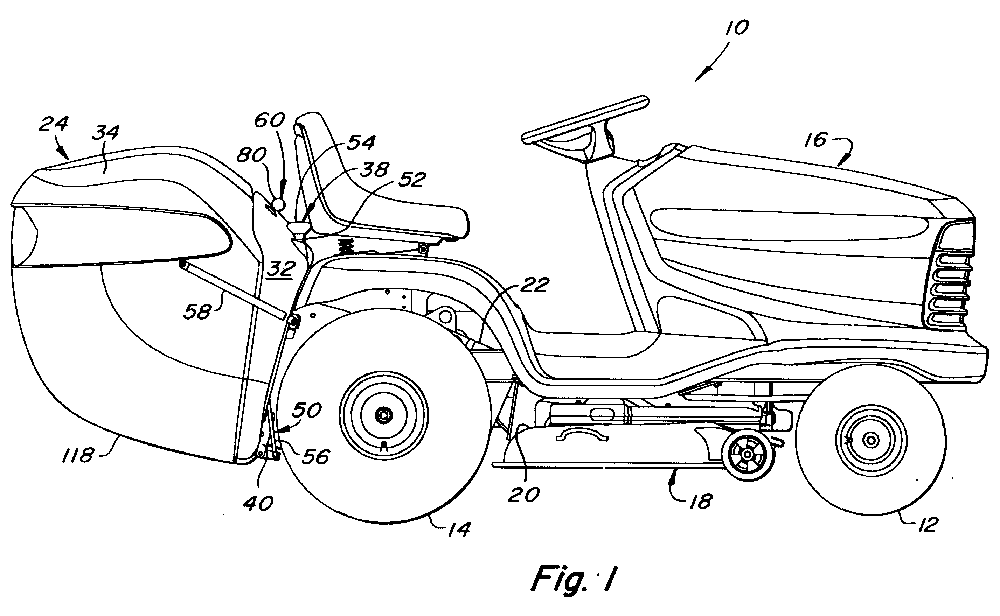

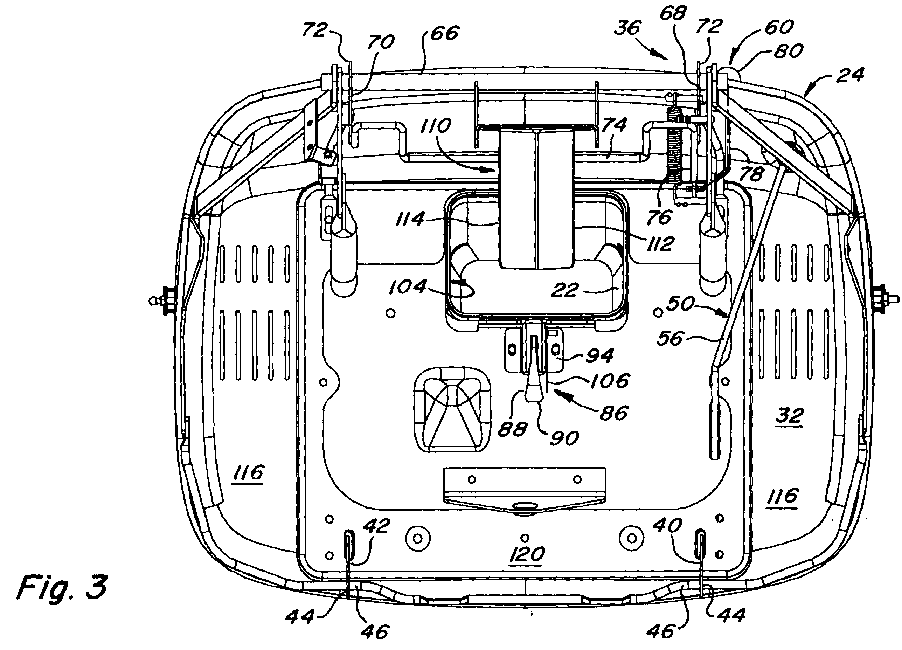

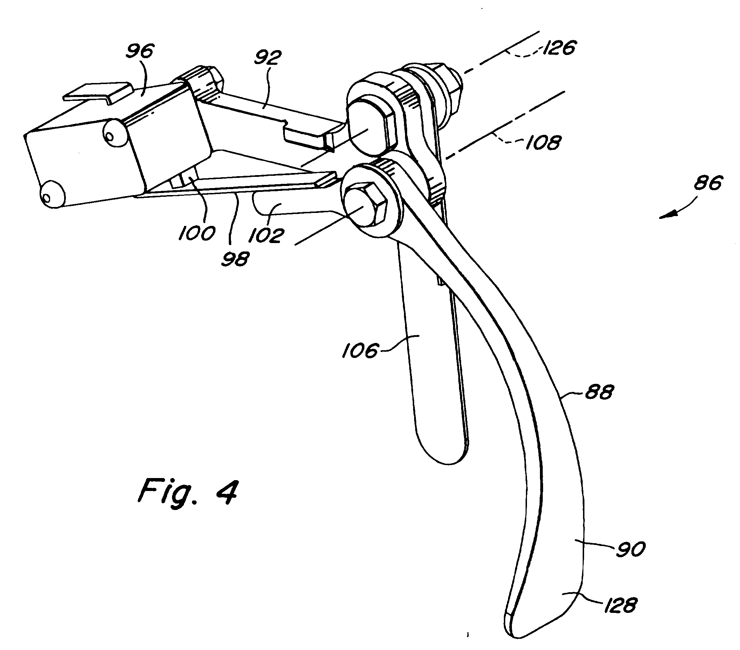

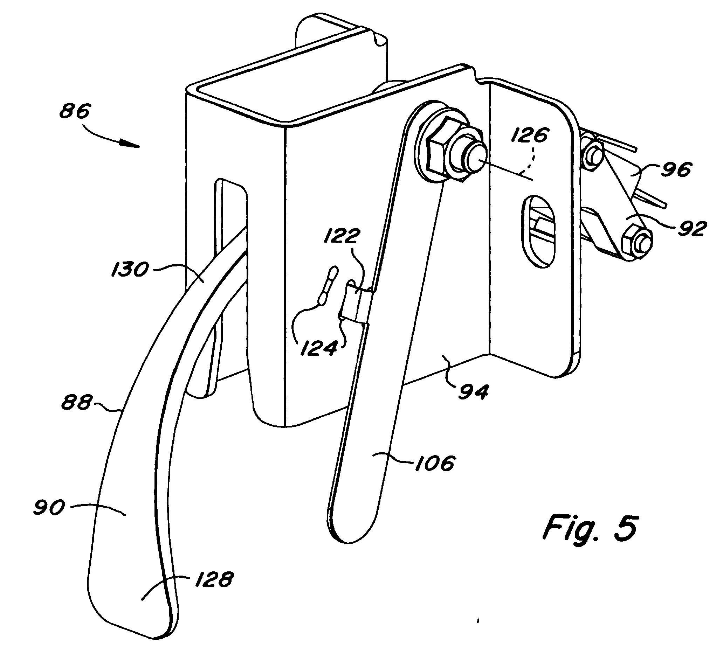

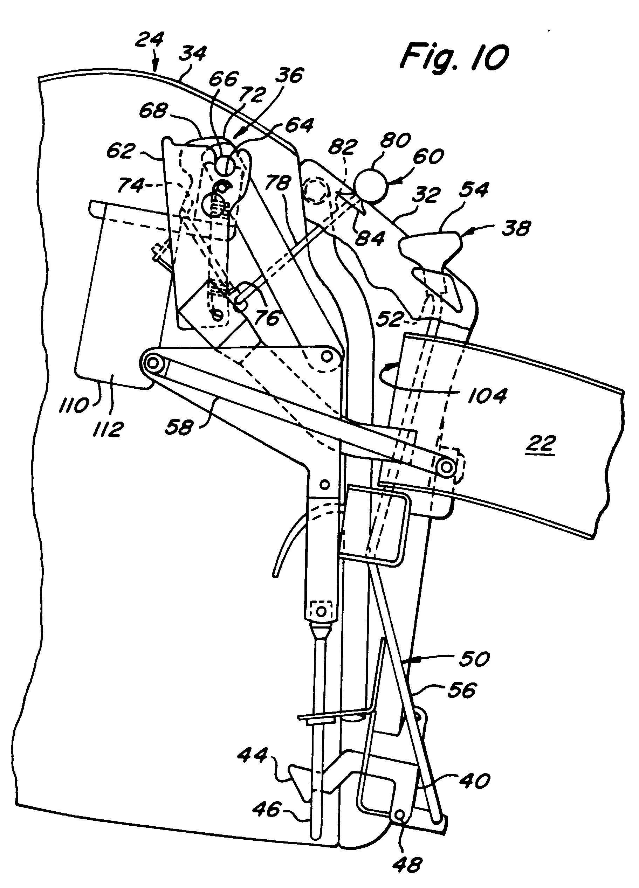

Es wird nun auf die Figuren 1 - 10 Bezug genommen, in denen bevorzugte Ausführungsformen der vorliegenden Erfindung gezeigt werden. Es wird ein Rasen- und Gartentraktor bzw. ein Fahrzeug oder Arbeitsgerät 10 mit einem vorderen Paar lenkbarer Räder 12 und einem rückwärtigen Paar von angetriebenen Rädern 14 zur Verfügung gestellt. Ein in dem vorderen Bereich des Arbeitsgeräts 10 vorgesehener Motor 16 treibt das rückwärtige Paar von Rädern 14 an und liefert über ein Riemensystem Rotationsenergie zu in einem Mähwerk bzw. einer Arbeitseinheit 18 rotierenden Mähmessern. Die Mähmesser schneiden oder mähen Gras und Pflanzenwuchs in üblicher Weise. Die Arbeitseinheit 18 ist unterhalb des Arbeitsgeräts 10 und zwischen dem vorderen und dem rückwärtigen Paar von Rädern 12 und 14 angeordnet. Die Arbeitseinheit 18 bestimmt einen Auswurfausgang 20 durch den von den Mähmessern geschnittene Pflanzenabfälle aus der Arbeitseinheit 18 austreten. Ein Auswurfkanal 22 nimmt die Pflanzenabfälle von dem Auswurfausgang 20 auf und leitet die Pflanzenabfälle allgemein zwischen dem rückwärtigen Paar von Rädern 14 nach oben und nach rückwärts entlang der Mittellinie des Arbeitsgeräts 10. Der Auswurfkanal 22 erstreckt sich im allgemeinen innerhalb des Rahmens des Arbeitsgeräts 10 und öffnet sich in einen Sammelbehälter 24, der an dem Heck des Arbeitsgeräts 10 angebracht ist. Der Auswurfkanal 22 leitet dadurch die Pflanzenabfälle von der Arbeitseinheit 18 in den Sammelbehälter 24.

Ein erster Behälterbereich 32 bestimmt die vorderen Wände des Sammelbehälters 24 und bleibt mit dem Arbeitsgerät 10 während aller Phasen des Betriebs verbunden. Ein zweiter Behälterbereich 34 bestimmt die rückwärtigen Wände des Sammelbehälters 24 und ist an dem ersten Behälterbereich 32 über einen Gelenkmechanismus 36 schwenkbar angebracht. Die ersten und zweiten Behälterbereiche 32 und 34 passen zusammen und bilden allgemein eine Dichtung gegeneinander, um Pflanzenabfälle, die von dem Auswurfkanal 22 in den Sammelbehälter 24 geleitet werden, einzuschließen. Der zweite Behälterbereich 34 ist in eine geöffnete Stellung verschwenkbar, um es dem Pflanzenabfallinhalt des Sammelbehälters 24 zu erlauben, abgeladen und geleert zu werden.

Ein erster Steuermechanismus 38 ist vorgesehen, welcher es bei Betätigung durch eine Bedienungsperson erlaubt, den Sammelbehälter 24 zu öffnen, um dessen Inhalt abzuladen, während er auf dem Arbeitsgerät 10 sitzt. Ein Paar von ersten Riegeln 40 und 42 ist mit dem ersten Behälterbereich 32 schwenkbar verbunden. Die ersten Riegel 40 und 42 weisen hakenförmige Bereiche 44 auf, die mit Gestängeelementen 46 in Eingriff bringbar sind, die von dem zweiten Behälterbereich 34 des Sammelbehälters 24 getragen werden. Wenn die Gestängeelemente 46 in den hakenförmigen Bereichen 44 der ersten Riegel 40 und 42 eingeschlossen sind, ist der zweite Behälterbereich 34 in seiner geschlossenen Stellung zur Aufnahme von Grasabfällen gesichert. Wenn die ersten Riegel 40 und 42 schwenken, um die Gestängeelemente 46 von den hakenförmigen Bereichen 44 zu befreien, ist der zweite Behälterbereich 34 des Sammelbehälters 24 frei, um nach oben und rückwärts in eine offene Stellung zu schwenken, um es den Pflanzenabfällen in dem Sammelbehälter 24 zu gestatten, auf den Boden zu fallen. Eine Welle 48 erstreckt sich zwischen den ersten Riegeln 40 und 42, um dazwischen eine Schwenkbewegung zu übertragen. Ein erster Hebel 50 ist mit einem der ersten Riegel 40 verbunden und erstreckt sich nach oben durch eine Öffnung 52, die in dem ersten Behälterbereich 32 des Sammelbehälters 24 angeordnet ist. Während eines Mähbetriebs rasten die ersten Riegel 40 und 42 an dem Gestängeelement 46 ein, um den zweiten Behälterbereich 34 des Sammelbehälters 24 in seiner geschlossenen Stellung in Anlage an dem ersten Behälterbereich 32 des Sammelbehälters 24 zu halten. Wenn der Sammelbehälter 24 während des Mähbetriebes gefüllt ist, kann die Bedienungsperson den Inhalt des Sammelbehälters 24 leeren, indem sie einen ersten Griff 54 nach unten drückt. Dies bewirkt, daß ein erstes Gestänge 56 sich nach unten schiebt, was wiederum bewirkt, daß der erste Riegel 40 um die Achse der Welle 48 verschwenkt. Die Welle 48 überträgt die Drehbewegung von einem ersten Riegel 40 auf den anderen ersten Riegel 42, wodurch beide erste Riegel 40 und 42 gleichzeitig verschwenken, um das Gestängeelement 46 von den hakenförmigen Bereichen 44 zu befreien. Der zweite Behälterbereich 34 des Sammelbehälters 24 ist dadurch frei, um nach oben um die durch den Gelenkmechanismus 36 bestimmte Achse zu verschwenken.

Gasfedern 58 spannen den zweiten Bereich 34 in Richtung eines nach oben gerichteten Schwenkvorgangs vor, so daß, wenn die ersten Riegel 40 und 42 die Gestängeelemente 46 freigeben, die Gasfedern 58 sofort eine Kraft anlegen werden, um den zweiten Behälterbereich 34 in seine geöffnete Stellung zu schwenken. Wenn der Inhalt des Sammelbehälters 24 verhältnismäßig leicht ist, können die Gasfedern 58 den Sammelbehälter 24 öffnen, ohne eine zusätzliche Anstrengung der Bedienungsperson zu erfordern. Wenn der Inhalt des Sammelbehälters 24 verhältnismäßig schwer ist, kann die Bedienungsperson erforderlich sein, um den zweiten Behälterbereich 34 des Sammelbehälters 24 manuell zu öffnen. Die Gasfedern 58 legen eine Kraft an den zweiten Behälterbereich 34 an, um die Bedienungsperson dabei zu unterstützen, den zweiten Behälterbereich 34 in seine offene Stellung zu schwenken. Die Pflanzenabfälle, die sich in dem Sammelbehälter 24 gesammelt haben, fallen dann durch ihr eigenes Gewicht nach unten auf den Boden, sobald der zweite Behälterbereich 34 in seine offene Stellung schwenkt.

Ein zweiter Steuermechanismus 60 ist vorgesehen, um es dem zweiten Behälterbereich 34 des Sammelbehälters 24 zu erlauben, vollständig von dem ersten Behälterbereich 32 des Sammelbehälters 24 abgenommen zu werden. Ein Paar von Haltern 62 ist mit dem ersten Behälterbereich 32 fest verbunden und beinhaltet Aussparungen 64, in denen eine Schwenkwelle 66 aufgenommen ist. Die Schwenkwelle 66 ist mit dem zweiten Behälterbereich 34 fest verbunden und bestimmt die Achse, um die der zweite Behälterbereich 34 schwenkt, wenn er zwischen seinen offenen und geschlossenen Stellungen verschwenkt. Ein Paar von zweiten Riegeln 68 und 70 ist schwenkbar an den Haltern 62 angebracht und weist hakenförmige Bereiche 72 auf, die dazu dienen, die Schwenkwelle 66 in den Aussparungen 64 einzuschließen. Eine Stange 74 erstreckt sich zwischen den zweiten Riegeln 68 und 70, um dazwischen eine Schwenkbewegung zu übertragen. Ein Armbereich 76 geht von der Stange 74 aus. Ein zweites Glied 78 ist schwenkbar mit dem Armbereich 76 verbunden und ein zweiter Griff 80 ist auf das obere Ende 82 des zweiten Glieds 78 aufgesetzt. Das zweite Glied 78 ist in einer Öffnung 84 angeordnet, die durch den ersten Bereich 32 des Sammelbehälters 24 bestimmt wird.

Während des Mähbetriebs befindet sich der Gelenkmechanismus 36 in einem geschlossenen Betriebszustand, wobei die zweiten Riegel 68 und 70 in Stellungen verschwenkt sind, in denen die hakenförmigen Bereiche 72 die Schwenkwelle 66 in den Aussparungen 64 einschließen oder blockieren. Der zweite Behälterbereich 34 ist dadurch sicher an dem ersten Behälterbereich 32 angebracht. Wenn die Bedienungsperson den ersten Steuermechanismus 38 einrastet, um den zweiten Behälterbereich 34 zu öffnen und um den Inhalt des Sammelbehälters 24 abzuladen, wird der zweite Behälterbereich 34 um die durch die Schwenkwelle 66 bestimmte Achse verschwenken. Die Bedienungsperson könnte wünschen, den zweiten Behälterbereich 34 von dem ersten Behälterbereich 32 des Sammelbehälters 24 zu entfernen. Ein Entfernen des zweiten Behälterbereichs 34 erlaubt es der Bedienungsperson, zusätzliche Anbauelemente, wie eine Ablenkplatte, anzubringen, die an das Ende des Auswurfkanals 22 angebracht werden kann, um Pflanzenabfälle auf der Oberfläche des Bodens zu verteilen. Ein Entfernen des zweiten Behälterbereichs 34 erlaubt auch ein kompaktes Verstauen des Arbeitsgeräts 10 und stellt einen Zugang zu dem Ausgang 104 des Auswurfkanals 22 und zu dem Innern des Sammelbehälters 24 zur Reinigung zur Verfügung. Um den zweiten Behälterbereich 34 zu entfernen, wird die Bedienungsperson zuerst den zweiten Behälterbereich 34 öffnen, indem sie den ersten Griff 54 herunterdrückt. Mit dem geöffneten zweiten Behälterbereich 34 in seiner geöffneten Stellung kann die Bedienungsperson die Gasfedern 58 von dem ersten Behälterbereich 32 des Sammelbehälters 24 abbauen. Die Bedienungsperson kann dann an dem zweiten Griff 80 nach oben ziehen, wodurch das zweite Glied 78 in der Öffnung 84 in dem ersten Behälterbereich nach oben verschoben wird. Dies bewirkt, daß der Armbereich 76 nach vorne schwingt. Die zweiten Riegel 68 und 70, welche über die Stange 74 verbunden sind, schwenken um den Armbereich 76, und die hakenförmigen Bereiche 72 schwingen nach rückwärts, um im allgemeinen die Aussparungen 64 zu öffnen oder aufzudecken. Die Schwenkwelle 66 ist dann nicht mehr durch die hakenförmigen Bereiche 72 gegen ein Entfernen aus den Aussparungen 64 blockiert. In dieser Einstellung kann die Bedienungsperson die Schwenkwelle 66 aus den Aussparungen 64 heben und dabei den zweiten Behälterbereich 34 von dem ersten Behälterbereich 32 vollständig entfernen.

Ein Füllstandssensor 86 ist in dem Sammelbehälter 24 angeordnet und wirkt derart, daß die Bedienungsperson gewarnt wird, daß der Sammelbehälter 24 nahe daran ist, gefüllt zu sein. Der Füllstandssensor 86 weist ein Paddelelement bzw. einen Betätigungshebel 88 mit einem ersten Bereich 90 auf, der sich in den Sammelbehälter 24 erstreckt. Der Betätigungshebel 88 ist schwenkbar an einem Halterungselement 92 angebracht. Das Halterungselement 92 wird schwenkbar durch einen Anbauhalter 94 gehalten, der mit dem Inneren des Sammelbehälters 24 verstiftet oder anderweitig fest verbunden ist. An dem Halterungselement 92 ist auch ein elektrischer Schalter 96 angebracht. Eine Blattfeder 98 liegt an einem Schalterknopf 100 an und erstreckt sich nach außen, um an einem zweiten Bereich 102 des Betätigungshebels 88 anzugreifen. Wenn sich Grasabfälle in dem Sammelbehälter 24 ansammeln, werden diese möglicherweise auf den ersten oder rückwärtigen Bereich 90 des Betätigungshebels 88 fallen und an ihm anliegen, wodurch verursacht wird, daß der erste Bereich 90 des Betätigungshebels 88 nach unten verschwenkt. Wenn der rückwärtige Bereich 90 des Betätigungshebels 88 aufgrund der durch die Abfälle aufgebrachten Kraft nach unten verschwenkt, wird der zweite Endbereich 102 des Betätigungshebels 88 nach oben gegen die Blattfeder 98 verschwenken, wodurch die Blattfeder 98 den Knopf 100 herunterdrückt. Dies betätigt den Schalter 96, was einen hörbaren Alarm auslöst, der die Bedienungsperson in Kenntnis setzt, daß der Füllstandssensor 86 aktiviert wurde und daß der Sammelbehälter 24 fast vollständig gefüllt ist. Die Bedienungsperson kann dann aufhören zu mähen und kann den Sammelbehälter 24 leeren, bevor der Auswurfkanal 22 verstopft.

Der Füllstandssensor 86 ist direkt neben dem Auswurf 104 des Auswurfkanals 22 angeordnet. Der Füllstandssensor 86 ist an dieser Stelle angeordnet, so daß er durch die Ansammlung von Abfällen in der Nähe des Auswurfs 104 des Auswurfkanals 22 ausgelöst wird. Wenn sich Abfälle in dem Sammelbehälter 24 in solchem Maße ansammeln, daß Abfälle in den Auswurf 104 des Auswurfkanals 22 zurückstauen und dadurch den Auswurfkanals 22 verstopfen, dann wird die Bedienungsperson das Mähen unterbrechen und mit ihrer Hand in den Auswurfkanal 22 hineingreifen müssen, um die Abfälle aus dem Auswurfkanal 22 zu lösen. Dies ist ein zeitaufwendiger und schmutziger Vorgang und stellt eine nicht wünschenswerte Unterbrechung des Mähvorgangs dar. Daher ist der Füllstandssensor 86 direkt unterhalb des Auswurfs 104 des Auswurfkanals 22 angeordnet, so daß er ausgelöst wird, wenn sich Grasabfälle, die sich in dem Sammelbehälter 24 ansammeln, dem Auswurf 104 des Auswurfkanals 22 annähern.

Der Füllstandssensor 86 kann in eine Mehrzahl von Stellungen gebracht werden, um es der Bedienungsperson zu erlauben, die Empfindlichkeit des Füllstandssensors 86 einzustellen. Der Füllstandssensor 86 ist einstellbar, so daß der Füllstandssensor 86 bei unterschiedlichen Winkelstellungen des Betätigungshebels 88 ausgelöst wird, was es dem Füllstandssensor 86 erlaubt, die Bedienungsperson zur passenden Zeit bei verschiedenen Mähbedingungen, so wie bei dickem, nassem, schweren Gras oder trockenem, leichten Gras, zu warnen. Das Halterungselement 92 ist um eine Achse 126 schwenkbar, die durch seine Verbindung mit dem Anbauhalter 94 bestimmt wird.

Ein Schwenkarm 106 ist wirksam mit dem Anbauhalter 94 verbunden und kann durch die Bedienungsperson ergriffen werden, um das Halterungselement 92 um seine Achse 126 zu schwenken. Der Schalter 96, die Blattfeder 98 und der Betätigungshebel 88 sind mit dem Halterungselement 92 montiert und schwenken daher als eine Einheit mit dem Halterungselement 92 und dem Schwenkarm 106. Der Schwenkarm 106 wird in seinen verschiedenen Stellungen durch einen Schenkel 122 gehalten, der durch eine von einer Mehrzahl von Öffnungen 124 aufgenommen wird, die in dem Anbauhalter 94 vorgesehen sind.

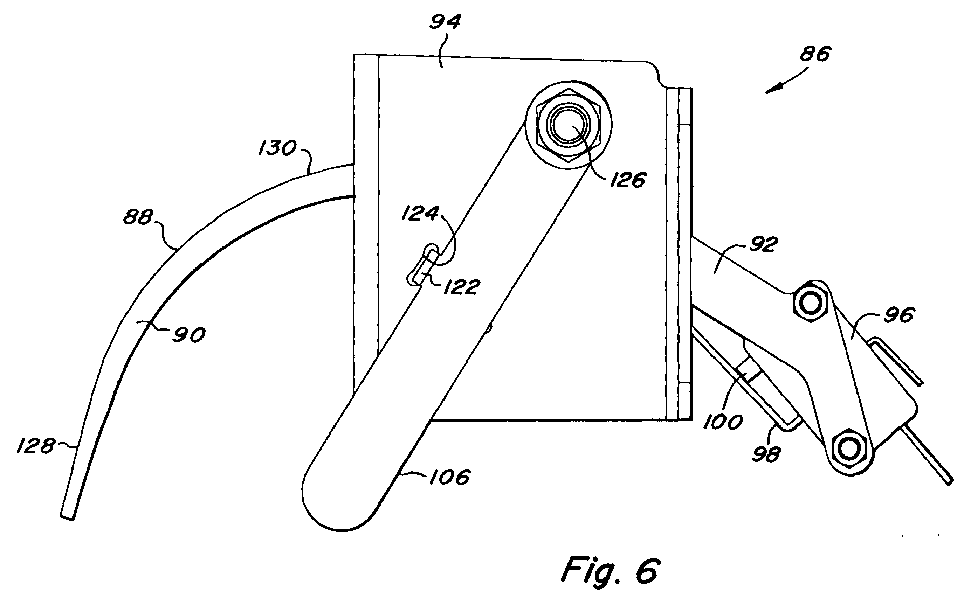

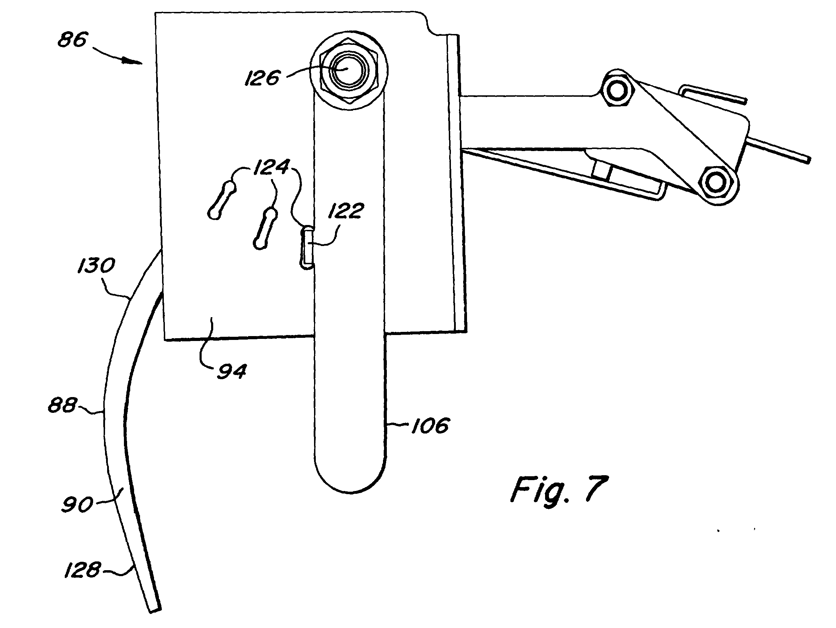

Ein Verschwenken des Schwenkarms 106 auf diese Art und Weise, verändert den Schwenkwinkel des Betätigungshebels 88 in dem Sammelbehälter 24, woraus folgt, wieviel Kraft auf den Betätigungshebel 88 ausgeübt werden muß, um den Schalter 96 zu betätigen. Beispielsweise wird, wenn der Betätigungshebel 88 in einer Stellung, wie sie in Figur 6 gezeigt wird, in einer verhältnismäßig aufrechten oder sich horizontal erstreckenden Ausrichtung angeordnet ist, eine verhältnismäßig kleine Kraft nach unten den Schalter 96 auslösen. Das Gewicht von sich auf dem Betätigungshebel 88 ansammelnden Grasabfällen wird direkt nach unten geleitet. Mit dem Betätigungshebel 88 in seiner in Figur 6 gezeigten aufrechten Stellung wird diese Kraft oder das Gewicht der Abfälle über eine verhältnismäßig große senkrechte Strecke von der Schwenkachse 108 des Betätigungshebels 88 geleitet, wodurch ein verhältnismäßig großer Hebelarm um die Schwenkachse 108 des Betätigungshebel 88 zur Verfügung gestellt wird. Dies liefert ein verhältnismäßig großes Drehmoment oder Moment um die Schwenkachse 108, wodurch bewirkt wird, daß der Betätigungshebel 88 verschwenkt, wenn verhältnismäßig kleine Kräfte auf den Betätigungshebel 88 einwirken. Der Betätigungshebel 88 kann auch dadurch eingestellt werden, daß der Schwenkarm 106 in die mehr vertikale Stellung, wie sie in Figur 7 gezeigt wird, gebracht wird. In dieser Ausrichtung weisen die gesammelten Abfälle auf der Oberseite des Betätigungshebels 88 ein Gewicht auf, das nach unten, aber in einer verhältnismäßig dichten senkrechten Entfernung von der Schwenkachse 108 des Betätigungshebels 88 gerichtet ist. Dies liefert einen verhältnismäßig kleinen Hebelarm, welcher in einem verhältnismäßig kleinen Drehmoment oder Moment resultiert. Daher muß eine verhältnismäßig große Kraft an dem Betätigungshebel 88 angreifen, um den Betätigungshebel 88 zu schwenken und um den Schalter 96 zu betätigen, wenn der Betätigungshebel 88 durch die Bedienungsperson in diese Ausrichtung gebracht wurde.

So wird, wenn der Betätigungshebel 88 in aufrechter Weise ausgerichtet ist, wie sie in Figur 6 gezeigt wird, eine verhältnismäßig kleine, nach unten gerichtete Kraft den ersten Bereich 90 des Betätigungshebels 88 nach unten schwenken, und wenn der Betätigungshebel 88 in einer mehr vertikalen Ausrichtung, wie sie in Figur 7 gezeigt wird, ausgerichtet ist, muß eine größere, nach unten gerichtete Kraft an dem Betätigungshebel 88 angelegt werden, um den ersten Bereich 90 des Betätigungshebels 88 nach unten zu verschwenken. Daher kann die Bedienungsperson, wenn sie in leichtem, trockenem Gras arbeitet oder wenn trockene Blätter gesammelt werden, es wünschen, den Schwenkarm 106 und den Betätigungshebel 88 in die in Figur 6 gezeigte Stellung zu bringen, so daß sich leichte Materialanhäufungen, die sich in dem Sammelbehälter 24 ansammeln, auf dem Betätigungshebel 88 ansammeln und dadurch den Füllstandssensor 86 auslösen, wenn sich die Abfälle in der Nähe des Auswurfs 104 des Auswurfkanals 22 anhäufen. Das wird dazu beitragen, sicherzustellen, daß der Schalter 96 gedrückt ist, bevor sich die leichten Abfälle in solchem Maße innerhalb des Sammelbehälters 24 ansammeln, daß sie beginnen, den Auswurf zu verstopfen. Wenn die Bedienungsperson schweres, nasses Gras mäht, kann sie es wünschen, den Schwenkarm 106 und den Betätigungshebel 88 in die in Figur 7 gezeigte Stellung zu bringen, so daß schwere Abfälle, die in dem Sammelbehälter 24 kreisen, den Füllstandssensor 86 nicht vorzeitig auslösen. Da der Betätigungshebel 88 in seiner in Figur 7 gezeigten Ausrichtung durch eine relativ große Kraft betätigt werden muß, um den Betätigungshebel 88 zu schwenken, wird der Betätigungshebel 88 nicht dazu neigen, zu schwenken, wenn eine kleine Menge schwerer Abfälle auf den Betätigungshebel 88 fällt oder diesen berührt. Dies trägt dazu bei, ein frühes Auslösen des Füllstandssensors 86 zu verhindern, bevor der Sammelbehälter 24 vollständig gefüllt ist. Der Füllstandssensor 86 entsprechend der vorliegenden Erfindung erlaubt es der Bedienungsperson, die Winkelstellung des Betätigungshebels 88 einzustellen, um dadurch die Empfindlichkeit des Füllstandssensors 86 zu verändern.

Die spezielle Form des ersten Bereichs 90 des Betätigungshebels 88 beeinflußt auch, wie der Betätigungshebel 88 auf Abfälle in dem Sammelbehälter 24 reagiert, wenn der Betätigungshebel 88 in seine verschiedenen Stellungen eingestellt oder geschwenkt ist. Der Betätigungshebel 88 bestimmt einen nach unten gebogenen Umriß und weist einen breiten Bereich oder einen Paddelabschnitt 128 in der Nähe des abgelegenen Endes des ersten Bereichs 90 und einen schmalen Bereich 130 in der Nähe der Schwenkachse 108 des Betätigungshebels 88 auf. Wenn der Betätigungshebel 88 in seiner geraden oder sich horizontal erstreckenden Form, wie sie in Figur 6 gezeigt wird, ausgerichtet ist, ist der Paddelbereich 128 mehr horizontal ausgerichtet, um nach unten gerichtete Kräfte durch das Gewicht der Abfälle, die sich in der Nähe des Füllstandssensors 86 sammeln, aufzunehmen. Daher können Abfälle sich leicht auf dem Paddelbereich 128 niederlassen oder auf diesen auftreffen, wenn er in dieser Weise ausgerichtet ist. Dies trägt dazu bei, sicherzustellen, daß selbst leichte, trockene Abfälle, die sich in diesem Bereich ansammeln, nach unten auf den Betätigungshebel 88 drücken und dazu beitragen, den Betätigungshebel 88 nach unten zu zwingen, um den Schalter 96 zu betätigen. Wenn der Betätigungshebel 88 nach unten in seine mehr vertikale Stellung, wie sie in Figur 7 gezeigt wird, eingestellt ist, ist jedoch der Paddelbereich 128 verhältnismäßig vertikal ausgerichtet und ist nicht so positioniert, um bereitwillig nach unten gerichtete Kräfte durch das Gewicht sich niederlassender Abfälle aufzunehmen. In dieser Betriebsart ist nur der schmale Bereich 130 ausgerichtet, um nach unten gerichtete Kräfte von den Abfällen aufzunehmen. Leichte, trockene Abfälle werden sich im allgemeinen aufgrund des schmaleren Oberflächengebiets mit geringerer Wahrscheinlichkeit auf dem schmalen Bereich 130 ansammeln, wodurch eine dichtere oder größere Ansammlung von Abfällen benötigt wird, um den Betätigungshebel 88 zu schwenken, wenn sie den schmalen Bereich 130 berührt anstatt den Paddelbereich 128 zu berühren.

Darüber hinaus ist der Paddelbereich 128 des Betätigungshebels 88 weiter von der Schwenkachse 108 des Betätigungshebels 88 beabstandet als der schmale Bereich 130, und daher ist der Hebelarm, wenn der Paddelbereich 128 so ausgerichtet ist, wie es in Figur 6 gezeigt wird, um nach unten gerichtete Kräfte von Abfällen aufzunehmen, verhältnismäßig groß vorgesehen, wodurch ein verhältnismäßig großes Drehmoment bewirkt wird, um den Betätigungshebel 88 um seine Schwenkachse 108 zu schwenken. Verhältnismäßig geringe nach unten gerichtete Kräfte, die an diesem Paddelbereich 128 angelegt werden, resultieren daher in einem verhältnismäßig großen an dem Betätigungshebel 88 angelegten Drehmoment. In dieser Betriebsart ist der Betätigungshebel 88 verhältnismäßig empfindlich bezüglich leichter Ansammlungen von Gras, wie wenn leichtes, trockenes Gras oder Blätter gemäht werden. Wie oben angeführt, hat dies den Vorteil, zu bewirken, daß der Alarm passend ausgelöst wird, bevor der Sammelbehälter gefüllt ist und der Auswurfkanal 22 verstopft, wenn leichtes Gras gemäht wird. Wenn der Betätigungshebel 88 und der Paddelbereich 128 in ihrer nach unten gerichteten Stellung mehr vertikal ausgerichtet sind, wie es in Figur 7 gezeigt wird, nimmt der schmale Bereich 130 einen größeren Anteil der nach unten gerichteten Kraft des Gewichts der Abfälle auf und der Paddelbereich 128 ist verhältnismäßig vertikal ausgerichtet, so daß er nicht viele der nach unten gerichteten Kräfte des Gewichts der Abfälle aufnimmt. Der schmale Bereich 130 ist näher an der Schwenkachse 108 des Betätigungshebels 88 angeordnet als der Paddelbereich 128, wodurch, durch die Abfälle, die den schmaleren Bereich 130 berühren, ein geringerer Hebelarm hervorgerufen wird, als bei dem Paddelbereich 128, was in einem geringeren Moment oder Drehmoment zum Schwenken des Betätigungshebels 88 resultiert. Daher muß eine größere Kraft auf den schmalen Bereich 130 als auf den Paddelbereich 128 aufgebracht werden, um den Betätigungshebel 88 zu verschwenken. Der Füllstandssensor 86 muß daher auf größere nach unten gerichtete Kräfte stoßen, um den Betätigungshebel 88 nach unten zu schwenken, wenn der Betätigungshebel 88 in seine mehr nach unten, vertikal ausgerichtete Stellung eingestellt ist. Wie oben angeführt, ist dies vorteilhaft, wenn dickes, nasses oder schweres Gras gemäht wird, da der Füllstandssensor 86 weniger geneigt ist, durch umherkreisende Abfälle ausgelöst zu werden, und daher werden weniger falsche Alarme ertönen und der Sammelbehälter 24 wird vollständiger gefüllt, bevor der Alarm ausgelöst wird.

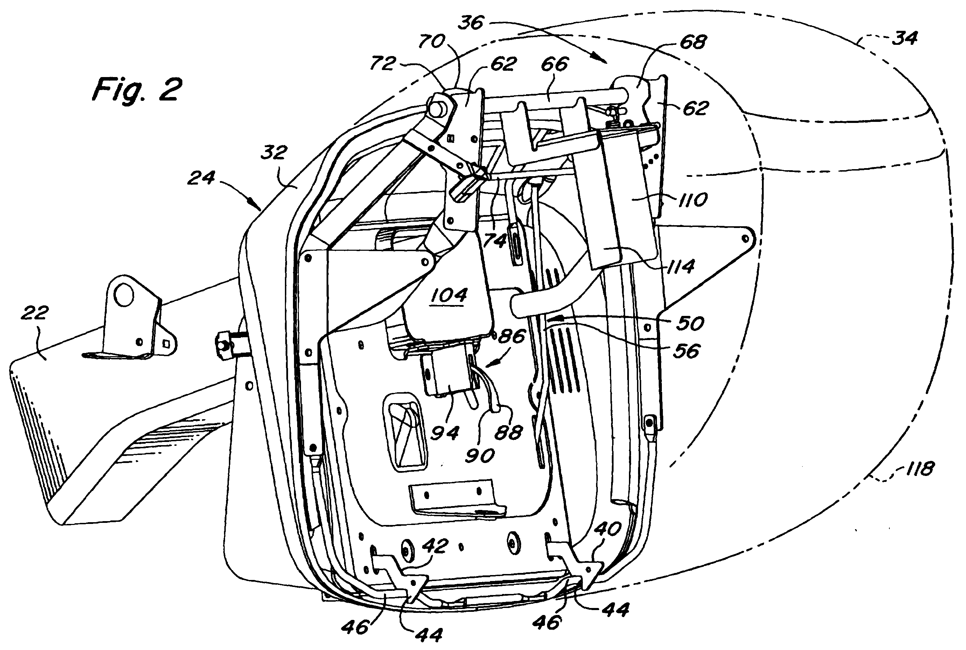

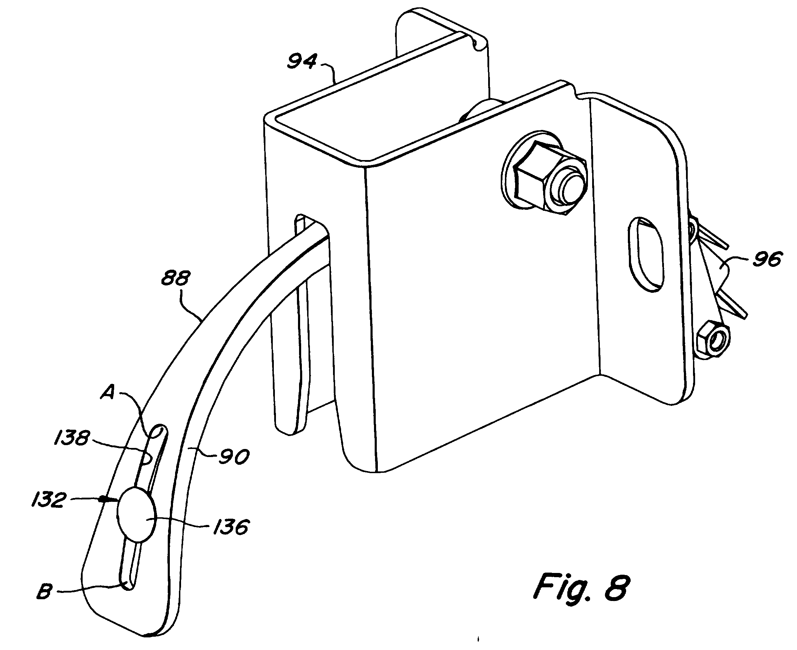

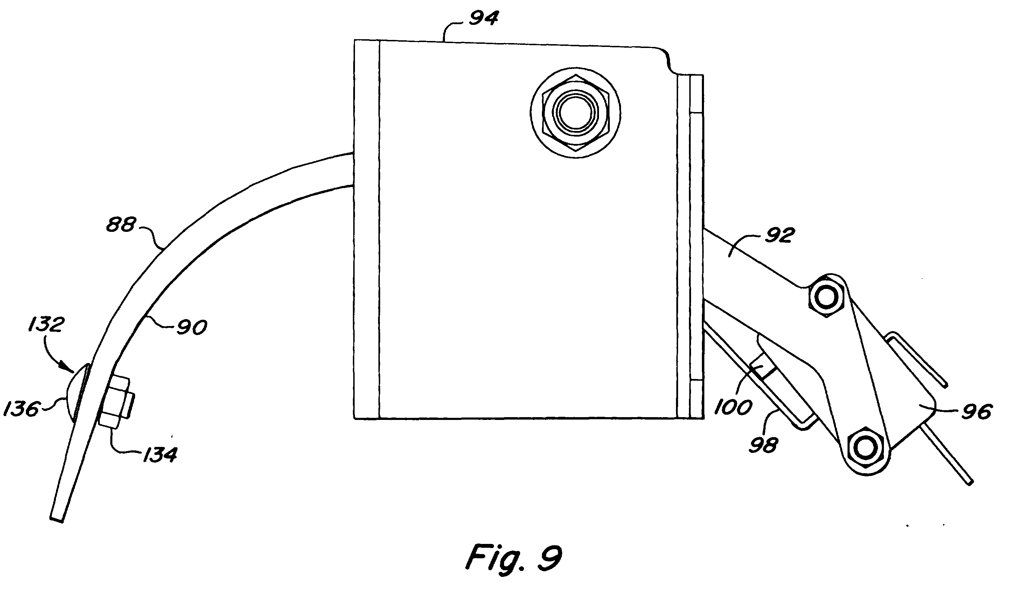

Es kann auch ein einstellbarer Füllstandssensor 86 vorgesehen werden, der ein Gewichtelement 132 aufweist, das verschiebbar an dem Betätigungshebel 86 vorgesehen ist, wie es am besten in den Figuren 8-9 gesehen werden kann. Das Gewichtelement 132 weist eine Mutter 134 und eine Schraube 136 auf, die in einem Schlitz 138 angeordnet ist, der in dem ersten Bereich 90 des Betätigungshebels 88 vorgesehen ist. Der Betätigungshebel 88 und der Schalter 95, die in den Figuren 8 und 9 gezeigt werden, sind nicht verstellbar, wie es der Füllstandssensor 86 ist, der in den Figuren 2 - 7 gezeigt wird. Vielmehr ist die Stellung des Gewichtelements 132 in einem Schlitz, der in dem Betätigungshebel 88, der in den Figuren 8 und 9 gezeigt ist, vorgesehen ist, verstellbar, um die Empfindlichkeit des Betätigungshebels 88 bezogen auf ein Verschwenken zu verändern. Wenn das Gewichtelement 132, wie in Figur 8 gezeigt, an Punkt A am Ende des Schlitzes 138, am nächsten an dem Schalter 96 und verhältnismäßig nahe an der Schwenkachse 108 des Betätigungshebels 88 angeordnet ist, wird das Gewicht des Gewichtelements 132 in einer verhältnismäßig geringen senkrechten Entfernung von der Schwenkachse 108 des Betätigungshebels 88 eingeleitet, wodurch ein verhältnismäßig kleiner Hebelarm zur Verfügung gestellt wird. Aufgrund dieses verhältnismäßig kleinen Hebelarms legt das Gewicht des Gewichtelements 132 nur eine verhältnismäßig kleine Drehmomentkraft auf den Betätigungshebel 88, um den Betätigungshebel 88 nach unten zu zwingen. Daher muß eine verhältnismäßig große Belastung nach unten durch Grasabfälle auf den Betätigungshebel 88 ausgeübt werden, um den Betätigungshebel 88 nach unten zu schwenken und um den Schalter 96 zu betätigen. Die Bedienungsperson kann wünschen, das Gewichtelement 132 in diese Stellung zu bringen, wenn nasses oder schweres Gras gemäht wird. Da der Betätigungshebel 88 verhältnismäßig große Belastungen aufnehmen muß, um den Betätigungshebel 88 nach unten zu schwenken und um den Schalter 96 zu betätigen, wird der Betätigungshebel 88 dazu neigen, sich nicht zu verschwenken, wenn umherfliegende Abfälle auf den Betätigungshebel 88 auftreffen. Falsche Alarme werden dadurch vermindert.

Die Bedienungsperson kann auch die Mutter 134 und die Schraube 136 lösen und das Gewichtelement 132 an den Punkt B an dem Ende des Schlitzes 138, das am weitesten von der Schwenkachse 108 des Betätigungshebels 88 entfernt und am nächsten zu dem äußeren Ende des Betätigungshebels 88 angeordnet ist, verschieben. In dieser Stellung wird das Gewicht des Gewichtelements 132 in einer verhältnismäßig großen, senkrechten Entfernung von der Schwenkachse 108 des Betätigungshebels 88 eingeleitet, wodurch ein verhältnismäßig großer Hebelarm und an dem Betätigungshebel 88 angelegte Drehmomentkräfte zur Verfügung gestellt werden. Diese Drehmomentkraft alleine ist trotzdem nicht groß genug, um den Betätigungshebel 88 nach unten zu schwenken. Eine Kraft muß auch über das Gewicht von Abfällen in dem Sammelbehälter 24 auf den Betätigungshebel 88 aufgebracht werden. Da die Drehmomentkraft, die auf den Betätigungshebel 88 durch das Gewicht des Gewichtelements 132 an dem Punkt B aufgebracht wird, verhältnismäßig groß ist, muß nur eine verhältnismäßig kleine Kraft durch Grasabfälle auf den Betätigungshebel 88 aufgebracht werden, um den Betätigungshebel 88 nach unten zu schwenken und um den Schalter 96 zu betätigen. Daher weisen Ansammlungen von verhältnismäßig leichtem Gras, das sich auf dem Betätigungshebel 88 anhäuft, ausreichendes Gewicht auf, um im Zusammenwirken mit dem Gewicht des Gewichtelements 132 an dem Punkt B, den Betätigungshebel 88 um die Schwenkachse 108 zu verschwenken und um den Schalter 96 zu betätigen. In dieser Anordnung ist der Betätigungshebel 88 ausreichend empfindlich, um unter der verhältnismäßig leichten Kraft, die durch leichtes, trockenes Gras und Blätter aufgebracht wird, zu verschwenken. Daher wird der Füllstandssensor 86 die Ansammlung von Grasabfällen, die sich an der Stelle des Füllstandssensors 85 anhäufen, feststellen bevor die Abfälle in den Auswurf 104 überlaufen und diesen verstopfen.

Die Bedienungsperson kann das Gewichtelement 132 auch unbestimmt in andere Stellungen in dem Schlitz 138 einstellen, was zu einer optimalen Empfindlichkeit bei einem bestimmten Satz von Betriebsbedingungen oder bei bestimmten Vorlieben der Bedienungsperson führt.

Die Figuren 8 und 9 zeigen einen Füllstandssensor 86 mit einer Mutter 134 und einer Schraube 136, die gelöst und in verschiedene Stellung in dem Schlitz 138 verschoben werden und wieder angezogen werden können, um die Empfindlichkeit des Füllstandssensors 86 einzustellen. Anordnungen, die von der Mutter 134, dem Bolzen 136 und Schlitz 138 abweichen, können benutzt werden, ohne vom Geist der vorliegenden Erfindung abzuweichen. Darüber hinaus wird das Gewichtelement 132 mit einem Betätigungshebel 88 gezeigt, der nicht schwenkbar einstellbar ist, es könnte aber trotzdem in Kombination mit einem schwenkbar einstellbaren Betätigungshebel 88 benutzt werden, um die Einstellbarkeit des Füllstandssensors 86 zu verbessern.

Die vorliegende Erfindung stellt auch einen Mechanismus zur Verbesserung der Verteilung der Abfälle in dem Sammelbehälter 24 zur Verfügung. Ein Abweiser bzw. eine V-förmige Leiteinrichtung 110 ist in dem Sammelbehälter 24 so angeordnet, daß ein Teil der Abfälle, die in den Sammelbehälter 24 durch den Auswurfkanal 24 geblasen werden, auf die Leiteinrichtung 110 auftreffen werden. Die Leiteinrichtung 110 weist erste und zweite Oberflächen 112 und 114 auf, die die V-Form der Leiteinrichtung 110 bestimmen. Abfälle, die die erste und die zweite Oberfläche 112 und 114 berühren, werden entweder zu der rechten oder der linken Seite in dem Sammelbehälter 24 gelenkt. Dies führt dazu, daß die seitlichen äußeren Bereiche 116 des Sammelbehälters 24 Grasabfälle aufnehmen. Abfälle, die in den seitlichen äußeren Bereichen 116 des Sammelbehälters 24 kreisen, werden sich schließlich auf dem Grund des Sammelbehälters 24 in der Nähe der seitlichen, äußeren Ecken des Sammelbehälters 24 absetzen. Die Leiteinrichtung 110 entsprechend der vorliegenden Erfindung ist in dem Sammelbehälter 24 angeordnet, um von dem Strom von Abfällen getroffen zu werden, und so, daß ein Teil des Abschnittstromes direkt unter der Leiteinrichtung 110 vorbei gelangen kann. Daher wird ein Teil des Abschnittstromes gerade nach rückwärts gelangen und wird die rückwärtige Wand 118 des Sammelbehälters 24 treffen. Dies stellt sicher, daß der zentrale Bereich 120 des Sammelbehälters 24 sich ebenfalls mit Abfällen füllen wird. Der ganze Boden des Sammelbehälters 24 wird daher im allgemeinen mit Abfällen bedeckt sein.

Wird eine Leiteinrichtung 110, wie sie in den Figuren 1-3 gezeigt wird, nicht benutzt, so werden die Abfälle dazu neigen, durch den Auswurfkanal 104 gerade zu der rückwärtigen Wand 118 des Sammelbehälters 24 geblasen zu werden und diese Abfälle werden dazu neigen, sich nur in dem Zentrum des Sammelbehälters 24 anzusammeln und nicht entlang der Seiten 116 des Sammelbehälters 24. Eine Anhäufung von Abfällen in dem Zentrum des Sammelbehälters 24 würde sich schließlich ansammeln bis der Füllstandssensor 86 ausgelöst wird, aber die seitlichen Bereiche des Sammelbehälters 24 wären verhältnismäßig leer. Daher würde der Sammelbehälter 24 nicht voll sein und der Füllstandssensor 86 würde vorzeitig ausgelöst. Dies würde in unnötig häufigen Unterbrechungen zum Abladen von Abfällen resultieren. Die Leiteinrichtung 110 entsprechend der vorliegenden Erfindung verbessert die Verteilung der Abfälle in dem Sammelbehälter 24, so daß der Sammelbehälter 24 eine größere Menge von Abfällen aufnehmen und vollständiger gefüllt werden kann, bevor der Füllstandssensor 86 ausgelöst wird. Dies führt zu weniger Unterbrechungen des Mähvorgangs zum Abladen von Abfällen.

## Patentansprüche

1. Füllstandssensor (86) mit einem Betätigungshebel (88) und einem Schalter (96), durch den ein Warnsignal auslösbar ist, wobei der Betätigungshebel (88) um eine vorzugsweise zumindest annähernd horizontale Schwenkachse (108) schwenkbar angeordnet ist, dadurch gekennzeichnet, daß das Drehmoment des der Schwerkraft ausgesetzten Betätigungshebels (88) um die Schwenkachse (108) veränderbar ist.

2. Füllstandssensor nach Anspruch 1, dadurch gekennzeichnet, daß der Abstand der Masse bzw. einer oder mehrerer Teilmassen des Betätigungshebels (88) von der Schwenkachse (108) des Betätigungshebels (88) veränderbar ist.

3. Füllstandssensor nach Anspruch 1 oder 2, dadurch gekennzeichnet, daß zumindest ein Gewichtelement (132) an dem Betätigungshebel (88) vorgesehen ist bzw. mit diesem zusammenwirkt und/oder das in verschiedenen Abständen von der Schwenkachse (108) des Betätigungshebels (88) festlegbar ist.

4. Füllstandssensor nach Anspruch 3, dadurch gekennzeichnet, daß das Gewichtelement (132) in einer an dem Betätigungshebel (88) vorgesehenen Führung, beispielsweise in der Art eines Schlitzes (138), verschieblich angeordnet ist und vorzugsweise durch eine Schraube (136) - Mutter (134) Kombination gebildet wird.

5. Füllstandssensor nach einem oder mehreren der vorherigen Ansprüche, dadurch gekennzeichnet, daß der Betätigungshebel (88) zumindest bereichsweise in einen Sammelbehälter (24) bzw. einen sich in den Sammelbehälter (24) öffnenden Auswurfkanal (22) hineinragen kann und der Schalter (96) durch ein Verschwenken des Betätigungshebels (88) betätigbar ist

6. Füllstandssensor nach Anspruch 5, dadurch gekennzeichnet, daß der in den Sammelbehälter (24) bzw. den Sammelkanal (22) ragende Bereich (90) des Betätigungshebels (88) und der Schalter (96) auf gegenüberliegenden Seiten der Schwenkachse (108) des Betätigungshebels (88) angeordnet sind.

7. Arbeitsgerät, vorzugsweise ein Gerät zur Rasen-, Garten- oder Grundstückspflege, mit wenigstens einer Arbeitseinheit (18), einem Auswurfkanal (22), einem Sammelbehälter (24) und einem Füllstandssensor (86) nach einem oder mehreren der vorherigen Ansprüche.

8. Arbeitsgerät nach Anspruch 7, dadurch gekennzeichnet, daß der Füllstandssensor (86) in dem Sammelbehälter (24) unterhalb des Auswurfs (104) des Auswurfkanals (22) angeordnet ist.

9. Arbeitsgerät nach Anspruch 7 oder 8, gekennzeichnet durch eine Leiteinrichtung (110) zur Verteilung eines den Auswurf (104) verlassenden Gutstroms, die vorzugsweise in dem Sammelbehälter (24) angeordnet ist.

10. Arbeitsgerät nach Anspruch 9, dadurch gekennzeichnet, daß die Leiteinrichtung (110) derart vor einer rückwärtigen Wand des Sammelbehälters (24) beabstandet angeordnet ist, daß der den Auswurf (104) verlassende Gutstrom stromabwärts der Leiteinrichtung (110) auf die rückwärtige Wand auftreffen kann.

11. Arbeitsgerät nach Anspruch 9 oder 10, dadurch gekennzeichnet, daß die Leiteinrichtung (110) zumindest eine erste und eine zweite Oberfläche (112, 114) aufweist, die zwischen sich einen Winkel einschließen, dessen Scheitel dem Auswurf (104) zugewandt ist.
